# EUROPÄISCHE PATENTSCHRIFT

(11) **EP 3 394 605 B1**
(45) Veröffentlichungstag und Bekanntmachung des Hinweises auf die Patenterteilung: **06.01.2021**
(21) Anmeldenummer: 16791643.6
(22) Anmeldetag: 09.11.2016
(51) Int. Cl.: G01N 27/407

(54) **SENSORELEMENT ZUR ERFASSUNG MINDESTENS EINER EIGENSCHAFT EINES MESSGASES IN EINEM MESSGASRAUM**
SENSOR ELEMENT FOR DETECTING AT LEAST ONE PROPERTY OF A MEASURING GAS IN A MEASURING GAS CHAMBER
ÉLÉMENT CAPTEUR POUR LA DÉTECTION D'AU MOINS UNE CARACTÉRISTIQUE D'UN GAZ À MESURER DANS UN ESPACE DE GAZ À MESURER

(30) Priorität: 23.12.2015 DE 102015226644
(43) Veröffentlichungstag der Anmeldung: 31.10.2018
(73) Patentinhaber: Robert Bosch GmbH, 70442 Stuttgart (DE)
(72) Erfinder: DEROMELAERE, Gaetan, 70806 Kornwestheim (DE); PIWONSKI, Michael, 70188 Stuttgart (DE); SAHM, Thorsten, 71334 Waiblingen (DE); RAFFELSTETTER, Peter, 74321 Bietigheim-Bissingen (DE); DIEHL, Lothar, 74376 Gemmrigheim (DE); LEHRE, Thilo, 70197 Stuttgart (DE)
(86) Internationale Anmeldenummer: PCT/EP2016/077172
(87) Internationale Veröffentlichungsnummer: WO 2017/108256

(56) Entgegenhaltungen:
- DE-A1-102006 034 365
- DE-A1-102007 049 715
- DE-A1-102013 212 370
- US-A- 4 797 194

## Beschreibung

### Stand der Technik

Aus dem Stand der Technik ist eine Vielzahl von Sensorelementen und Verfahren zur Erfassung mindestens einer Eigenschaft eines Messgases in einem Messgasraum bekannt. Dabei kann es sich grundsätzlich um beliebige physikalische und/oder chemische Eigenschaften des Messgases handeln, wobei eine oder mehrere Eigenschaften erfasst werden können. Die Erfindung wird im Folgenden insbesondere unter Bezugnahme auf eine qualitative und/oder quantitative Erfassung eines Anteils einer Gaskomponente des Messgases beschrieben, insbesondere unter Bezugnahme auf eine Erfassung eines Sauerstoffanteils in dem Messgasteil. Der Sauerstoffanteil kann beispielsweise in Form eines Partialdrucks und/oder in Form eines Prozentsatzes erfasst werden. Alternativ oder zusätzlich sind jedoch auch andere Eigenschaften des Messgases erfassbar, wie beispielsweise die Temperatur.

Beispielsweise können derartige Sensorelemente als so genannte Lambdasonden ausgestaltet sein, wie sie beispielsweise aus Konrad Reif (Hrsg.): Sensoren im Kraftfahrzeug, 1. Auflage 2010, S. 160-165, bekannt sind. Mit Breitband-Lambdasonden, insbesondere mit planaren Breitband-Lambdasonden, kann beispielsweise die Sauerstoffkonzentration im Abgas in einem großen Bereich bestimmt und damit auf das Luft-Kraftstoff-Verhältnis im Brennraum geschlossen werden. Die Luftzahl λ beschreibt dieses Luft-Kraftstoff-Verhältnis.

Aus dem Stand der Technik sind insbesondere keramische Sensorelemente bekannt, welche auf der Verwendung von elektrolytischen Eigenschaften bestimmter Festkörper basieren, also auf Ionen leitenden Eigenschaften dieser Festkörper. Insbesondere kann es sich bei diesen Festkörpern um keramische Festelektrolyte handeln, wie beispielsweise Zirkoniumdioxid (ZrO₂), insbesondere yttriumstabilisiertes Zirkoniumdioxid (YSZ) und scandiumdotiertes Zirkoniumdioxid (ScSZ), die geringe Zusätze an Aluminiumoxid (Al₂O₃) und/oder Siliziumoxid (SiO₂) enthalten können.

Sensorelemente sind offenbart in DE 10 2006 034365 A1 und in DE 10 2007 049715 A1.

Trotz der Vorteile der aus dem Stand der Technik bekannten Sensorelemente beinhalten diese noch Verbesserungspotenzial. So werden zur Messung der Konzentration von Sauerstoff- und/oder Stickstoffen in Abgasen von Automobilen keramische Abgassensoren eingesetzt. Die keramischen Sensoren werden mit integrierten Heizern nach Motorstart innerhalb weniger Sekunden auf eine Betriebstemperatur von etwa 700 °C bis 800 °C erhitzt. Die Zeit bis zum Erreichen der Betriebstemperatur, die so genannte Fast-Light-Off-Zeit, hängt stark von der im Heizer umgesetzten Heizleistung ab. Außerdem sinkt die Fast-Light-Off-Zeit je lokaler die Heizenergie in der Nähe der Nernstelektroden eingebracht wird, da hier die Temperaturbestimmung über Innenwiderstandsmessung erfolgt. Die maximale Heizleistung, die im Heizer eingebracht werden kann, wird unter anderem durch die maximale Stromstärke der Endstufe im Motorsteuergerät, die maximal zulässige Temperatur im Heizer-Mäander ohne Materialschädigung und die maximal auftretenden thermomechanischen Spannungen aufgrund von Temperaturunterschieden innerhalb der Keramik ohne Rissbildung und Risswachstum limitiert. Die Funktion eines solchen Sensorelements bedingt einen inneren Elektrodenhohlraum. Dieser Hohlraum stellt eine Wärmebarriere dar, welche die Wärmeleitung zwischen Heizelement und äußerer Pumpelektrode hemmt. Die dem Heizelement zugewandte Hohlraumseite wird beim Aufheizen schneller heiß als die dem Heizelement abgewandte Seite. Dadurch entstehen besonders an der äußeren Hohlraumkante thermomechanische Spannungen, welche durch die Kerbwirkung der Hohlraumkante noch erhöht werden.

### Offenbarung der Erfindung

Es wird daher ein Sensorelement zur Erfassung mindestens einer Eigenschaft eines Messgases in einem Messgasraum vorgeschlagen, welches die Nachteile bekannter Sensorelemente zumindest weitgehend vermeidet und bei dem insbesondere ein besseres Aufheizverhalten vorliegt.

Ein erfindungsgemäßes Sensorelement zur Erfassung mindestens einer Eigenschaft eines Messgases im Messgasraum, insbesondere zur Erfassung eines Anteils einer Gaskomponente in dem Messgas oder einer Temperatur des Messgases, umfasst einen keramischen Schichtaufbau mit mindestens einer elektrochemischen Zelle. Die elektrochemische Zelle weist mindestens eine erste Elektrode, eine zweite Elektrode und mindestens einen die erste Elektrode und die zweite Elektrode verbindenden Festelektrolyten auf. In dem Schichtaufbau ist ein Elektrodenhohlraum ausgebildet. Die zweite Elektrode ist dabei so in dem Schichtaufbau angeordnet, dass die zweite Elektrode dem Elektrodenhohlraum zuweist bzw. diesem ausgesetzt ist. Die zweite Elektrode weist mindestens einen ersten Außendurchmesser auf, der größer als ein erster Außendurchmesser des Elektrodenhohlraums ist.

Durch die Veränderung der Hohlraumgeometrie lässt sich ein den Elektrodenhohlraum umgebender Dichtrahmen auf Höhe des Elektrodenhohlraums verbreitern. Durch die Verbreiterung des Dichtrahmens wird die Wärmeübertragungsfläche bei gegebener Gesamtbreite des Sensorelements deutlich erhöht. Dies führt zu einer Absenkung des Temperaturunterschieds zwischen Unterseite und Oberseite des Hohlraums und damit zu verminderten thermomechanischen Spannungen. Die Reduzierung der thermomechanischen Spannungen ermöglicht ein schnelleres Aufheizen mit höheren Heizspannungen. Dadurch, dass der äußere Durchmesser der zweiten Elektrode größer ist als der äußere Durchmesser des Elektrodenhohlraums ist, wird eine Verfüllung der äußeren Hohlraumkante mit Platin erzielt, die die Kerbspannung in diesem Bereich mindert und eine plastische Verformung vor dem keramischen Riss erlaubt.

Der Elektrodenhohlraum ist erfindungsgemäß ringförmig ausgebildet sein. Unter ringförmig ist dabei eine in sich geschlossene Kontur zu verstehen, die nicht zwangsläufig kreisringförmig sein muss. Der Elektrodenhohlraum weist mindestens zwei runde Elektrodenhohlraumschnitte auf, die sich mit einem Mittelpunkt des Elektrodenhohlraums dazwischen gegenüberliegen. Der erste Außendurchmesser des Elektrodenhohlraums wird durch die zwei runden Elektrodenhohlraumabschnitte definiert. Die zweite Elektrode ist ebenfalls ringförmig ausgebildet sein und weist mindestens zwei runde Elektrodenhohlraumabschnitte auf, die sich mit einem Mittelpunkt der zweiten Elektrode dazwischen gegenüberliegen. Der erste Außendurchmesser der zweiten Elektrode ist durch die zwei runden Elektrodenabschnitte definiert. Die zwei runden Elektrodenhohlraumabschnitte und die zwei runden Elektrodenabschnitte sind parallel zueinander angeordnet. Beispielsweise sind die jeweiligen Abschnitte parallel übereinander angeordnet.

Die zwei runden Elektrodenhohlraumabschnitte können identische Radien aufweisen. Die zwei runden Elektrodenabschnitte können identische Radien aufweisen.

Der Elektrodenhohlraum weist erfindungsgemäß zwei gerade Elektrodenhohlraumabschnitte aufweisen, die sich mit einem Mittelpunkt des Elektrodenhohlraums dazwischen gegenüberliegen. Ein zweiter Außendurchmesser des Elektrodenhohlraums ist durch die zwei geraden Elektrodenhohlraumabschnitte definiert. Die zweite Elektrode weist zwei gerade Elektrodenabschnitte auf, die sich mit einem Mittelpunkt der zweiten Elektrode dazwischen gegenüberliegen. Ein zweiter Außendurchmesser der zweiten Elektrode ist durch die zwei geraden Elektrodenabschnitte definiert. Der zweite Außendurchmesser der zweiten Elektrode ist größer als der zweite Außendurchmesser des Elektrodenhohlraums. Die zwei geraden Elektrodenhohlraumabschnitte und die zwei geraden Elektrodenabschnitte sind parallel zueinander angeordnet. Der Schichtaufbau weist eine Anschlussseite, eine Stirnseite, eine Oberseite, eine Unterseite und zwei Seitenflächen auf, wobei die Seitenflächen die Oberseite und die Unterseite verbinden. Die zwei geraden Elektrodenhohlraumabschnitte und die zwei geraden Elektrodenabschnitte sind parallel zu den Seitenflächen angeordnet.

Die zwei runden Elektrodenhohlraumabschnitte können unterschiedliche Radien aufweisen. Die zwei runden Elektrodenabschnitte können unterschiedliche Radien aufweisen. Der Elektrodenhohlraum kann mindestens zwei gerade Elektrodenhohlraumabschnitte aufweisen, die sich mit einem Mittelpunkt des Elektrodenhohlraums dazwischen gegenüberliegen. Ein zweiter Außendurchmesser des Elektrodenhohlraums kann durch die zwei geraden Elektrodenhohlraumabschnitte definiert sein. Die zweite Elektrode kann mindestens zwei gerade Elektrodenabschnitte aufweisen, die sich mit einem Mittelpunkt der zweiten Elektrode dazwischen gegenüberliegen. Die zwei geraden Elektrodenhohlraumabschnitte und die zwei geraden Elektrodenabschnitte können parallel zueinander angeordnet sein. Ein zweiter Außendurchmesser der zweiten Elektrode kann durch die zwei geraden Elektrodenabschnitte definiert sein. Der zweite Außendurchmesser der zweiten Elektrode kann größer als der zweite Außendurchmesser des Elektrodenhohlraums sein. Der Schichtaufbau kann eine Anschlussseite, eine Stirnseite, eine Oberseite, eine Unterseite und zwei Seitenflächen aufweisen, wobei die Seitenflächen die Oberseite und die Unterseite verbinden. Ein erster runder Elektrodenhohlraumabschnitt kann der Stirnseite zugewandt sein und ein zweiter runder Elektrodenhohlraumabschnitt kann der Anschlussseite zugewandt sein. Der erste runde Elektrodenhohlraumabschnitt kann einen größeren Radius als der zweite Elektrodenhohlraumabschnitt aufweisen. Ein erster runder Elektrodenabschnitt kann der Stirnseite zugewandt sein und ein zweiter runder Elektrodenabschnitt kann der Anschlussseite zugewandt sein. Der erste runde Elektrodenabschnitt kann einen größeren Radius als der zweite Elektrodenabschnitt aufweisen.

Unter einem Schichtaufbau ist im Rahmen der vorliegenden Erfindung allgemein ein Element zu verstehen, welches mindestens zwei übereinander angeordnete Schichten und/oder Schichtebenen aufweist. Die Schichten können dabei durch die Herstellung des Schichtaufbaus bedingt unterscheidbar und/oder aus unterschiedlichen Materialien und/oder Ausgangsstoffen hergestellt sein. Insbesondere kann der Schichtaufbau vollständig oder teilweise als keramischer Schichtaufbau ausgestaltet sein.

Unter einer Festelektrolytschicht ist im Rahmen der vorliegenden Erfindung ein Körper oder Gegenstand mit elektrolytischen Eigenschaften, also mit Ionen leitenden Eigenschaften, zu verstehen. Insbesondere kann es sich um einen keramischen Festelektrolyten handeln. Dies umfasst auch das Rohmaterial eines Festelektrolyten und daher die Ausbildung als so genannter Grünling oder Braunling, die erst nach einem Sintern zu einem Festelektrolyten wird. Insbesondere kann der Festelektrolyt als Festelektrolytschicht oder aus mehreren Festelektrolytschichten ausgebildet sei. Unter einer Schicht ist im Rahmen der vorliegenden Erfindung eine einheitliche Masse in flächenhafter Ausdehnung einer gewissen Höhe zu verstehen, die über, unter oder zwischen anderen Elementen liegt.

Unter einer Elektrode ist im Rahmen der vorliegenden Erfindung allgemein ein Element zu verstehen, welches in der Lage ist, den Festelektrolyten derart zu kontaktieren, dass durch den Festelektrolyten und die Elektrode ein Strom aufrechterhalten werden kann. Dementsprechend kann die Elektrode ein Element umfassen, an welchem die Ionen in den Festelektrolyten eingebaut und/oder aus dem Festelektrolyten ausgebaut werden können. Typischerweise umfassen die Elektroden eine Edelmetallelektrode, welche beispielsweise als Metall-Keramik-Elektrode auf dem Festelektrolyten aufgebracht sein kann oder auf andere Weise mit dem Festelektrolyten in Verbindung stehen kann. Typische Elektrodenmaterialien sind Platin-Cermet-Elektroden. Auch andere Edelmetalle, wie beispielsweise Gold oder Palladium, sind jedoch grundsätzlich einsetzbar.

Unter einem Heizelement ist im Rahmen der vorliegenden Erfindung ein Element zu verstehen, das zum Erwärmen des Festelektrolyten und der Elektroden auf mindestens ihre Funktionstemperatur und vorzugsweise auf ihre Betriebstemperatur dient. Die Funktionstemperatur ist diejenige Temperatur, ab der der Festelektrolyt für Ionen leitend wird und ungefähr 350 °C beträgt. Davon ist die Betriebstemperatur zu unterscheiden, die diejenige Temperatur ist, bei der das Sensorelement üblicherweise betrieben wird und die höher ist als die Funktionstemperatur. Die Betriebstemperatur kann beispielsweise von 700 °C bis 950 °C sein. Das Heizelement kann einen Heizbereich und mindestens eine Zuleitungsbahn umfassen. Unter einem Heizbereich ist im Rahmen der vorliegenden Erfindung der Bereich des Heizelements zu verstehen, der in dem Schichtaufbau entlang einer zu der Oberfläche des Sensorelements senkrechten Richtung mit einer Elektrode überlappt. Üblicherweise erwärmt sich der Heizbereich während des Betriebs stärker als die Zuleitungsbahn, so dass diese unterscheidbar sind. Die unterschiedliche Erwärmung kann beispielsweise dadurch realisiert werden, dass der Heizbereich einen höheren elektrischen Widerstand aufweist als die Zuleitungsbahn. Der Heizbereich und/oder die Zuleitung sind beispielsweise als elektrische Widerstandsbahn ausgebildet und erwärmen sich durch Anlegen einer elektrischen Spannung. Das Heizelement kann beispielsweise aus einem Platin-Cermet hergestellt sein.

Unter einer Dicke eines Bauteils oder Elements ist im Rahmen der vorliegenden Erfindung eine Abmessung in der Richtung des Schichtaufbaus und somit senkrecht zu den einzelnen Schichtebenen des Schichtaufbaus zu verstehen.

Unter einer elektrochemischen Zelle ist im Rahmen der vorliegenden Erfindung ein Element zu verstehen, das ausgewählt ist aus der Gruppe bestehend aus Pumpzelle und Nernstzelle.

Unter einem Außendurchmesser einer Elektrode und eines Elektrodenhohlraums ist im Rahmen der vorliegenden Erfindung eine äußere Abmessung der Elektrode und des Elektrodenhohlraums senkrecht zu einer Erstreckungsrichtung des Gaszutrittslochs zu verstehen. Diese Abmessung wird somit parallel zu den Schichten des Schichtaufbaus bestimmt.

Ein Grundgedanke der vorliegenden Erfindung ist im Vergleich zu herkömmlichen Sensorelementen die Verkleinerung des Elektrodenhohlraums, so dass sich der Dichtrahmenbereich vergrößern lässt. Durch die Verbreiterung des Dichtrahmens wird die Wärmeübertragungsfläche bei gegebener Gesamtbreite des Sensorelements vergrößert. Dies führt zu einer Absenkung des Temperaturunterschieds zwischen Unterseite und Oberseite des Elektrodenhohlraums und damit zu verminderten thermomechanischen Spannungen. Die Reduzierung der thermomechanischen Spannungen ermöglicht ein schnelles Aufheizen mit höheren Heizspannungen.

### Kurze Beschreibung der Zeichnungen

Weitere optionale Einzelheiten und Merkmale der Erfindung ergeben sich aus der nachfolgenden Beschreibung bevorzugter Ausführungsbeispiele, welche in den Figuren schematisch dargestellt sind.
Es zeigen:
- Figur 1: eine Explosionsdarstellung eines Sensorelements,
- Figur 2: eine Längsschnittansicht eines erfindungsgemäßen Sensorelements gemäß einer ersten Ausführungsform.

### Ausführungsformen der Erfindung

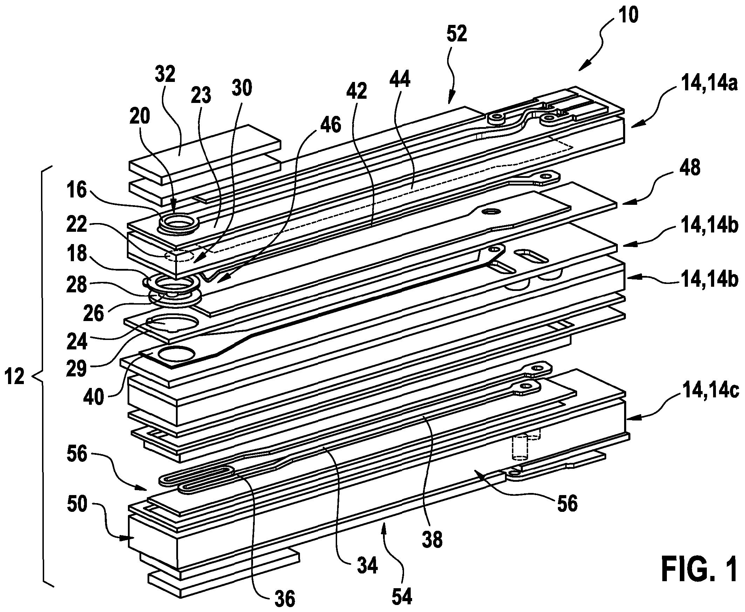

Das in Fig. 1 dargestellte Sensorelement 10 kann zum Nachweis von physikalischen und/oder chemischen Eigenschaften eines Messgases verwendet werden, wobei eine oder mehrere Eigenschaften erfasst werden können. Die Erfindung wird im Folgenden insbesondere unter Bezugnahme auf eine qualitative und/oder quantitative Erfassung einer Gaskomponente des Messgases beschrieben, insbesondere unter Bezugnahme auf eine Erfassung eines Sauerstoffanteils in dem Messgas. Der Sauerstoffanteil kann beispielsweise in Form eines Partialdrucks und/oder in Form eines Prozentsatzes erfasst werden. Grundsätzlich sind jedoch auch andere Arten von Gaskomponenten erfassbar, wie beispielsweise Stickoxide, Kohlenwasserstoffe und/oder Wasserstoff. Alternativ oder zusätzlich sind jedoch auch andere Eigenschaften des Messgases erfassbar. Die Erfindung ist insbesondere im Bereich der Kraftfahrzeugtechnik einsetzbar, so dass es sich bei dem Messgasraum insbesondere um einen Abgastrakt einer Brennkraftmaschine handeln kann, bei dem Messgas insbesondere um ein Abgas.

Das Sensorelement 10 weist einen keramischen Schichtaufbau 12 auf, welcher einen Festelektrolyten 14 und mindestens zwei Elektroden 16, 18 umfasst. Der Festelektrolyt 14 kann aus mehreren keramischen Schichten in Form von Festelektrolytschichten zusammengesetzt sein oder mehrere Festelektrolytschichten umfassen. Beispielsweise umfasst der Festelektrolyt 14 eine Pumpfolie oder Pumpschicht 14a, eine Zwischenfolie oder Zwischenschicht 14b und eine Heizfolie bzw. Heizschicht 14c, die übereinander bzw. untereinander angeordnet sind und auf die nachstehend noch ausführlicher eingegangen wird. Die Elektroden 16, 18 werden auch als erste Elektrode 16 und zweite Elektrode 18 bezeichnet, ohne jedoch eine Gewichtung ihrer Bedeutung anzugeben, sondern lediglich, um diese begrifflich zu unterscheiden. Die erste Elektrode 16 und die zweite Elektrode 18 sind durch den Festelektrolyten 14 und insbesondere die Pumpschicht 14a miteinander verbunden, insbesondere elektrisch verbunden.

Das Sensorelement 10 weist ferner einen Gaszutrittsweg 20 auf. Der Gaszutrittsweg 20 weist ein Gaszutrittsloch 22 auf, das sich von einer Oberfläche 23 des Festelektrolyten 14 ins Innere des Schichtaufbaus 12 erstreckt. In dem Festelektrolyten 14 kann ein Elektrodenhohlraum 24 vorgesehen sein, der das Gaszutrittsloch 22 umgibt, beispielsweise ringförmig oder rechteckig. Der Elektrodenhohlraum 24 ist Teil des Gaszutrittswegs 20 und kann über das Gaszutrittsloch 22 mit dem Messgasraum in Verbindung stehen. Beispielsweise erstreckt sich das Gaszutrittsloch 22 als zylindrisches Sackloch senkrecht zu der Oberfläche 23 des Festelektrolyten 14 in das Innere des Schichtaufbaus 12. Insbesondere ist der Elektrodenhohlraum 24 im Wesentlichen ringförmig oder rechteckig ausgebildet und von drei Seiten von dem Festelektrolyten 14 begrenzt. Zwischen dem Gaszutrittsloch 22 und dem Elektrodenhohlraum 24 ist ein Kanal 26 angeordnet, welcher ebenfalls Bestandteil des Gaszutrittswegs 20 ist. In diesem Kanal 26 ist eine Diffusionsbarriere 28 angeordnet, welche ein Nachströmen von Gas aus dem Messgasraum in den Elektrodenhohlraum 24 vermindert oder sogar verhindert und lediglich eine Diffusion ermöglicht. Der Elektrodenhohlraum 24 ist dem Festelektrolyten 14 sowie von einem Dichtrahmen 29 begrenzt. Der Dichtrahmen 29 kann grundsätzlich aus dem gleichen Material wie der Festelektrolyt 14 hergestellt sein.

Der Schichtaufbau 12 umfasst ferner eine elektrochemische Zelle in Form einer Pumpzelle 30. Über diese Diffusionsbarriere 28 lässt sich ein Grenzstrom der Pumpzelle 30 einstellen. Die Pumpzelle 30 umfasst die auf der Oberfläche 23 des Festelektrolyten 14 angeordnete erste Elektrode 16, die das Gaszutrittsloch 22 ringförmig umgeben kann und von dem Messgasraum beispielsweise durch eine gasdurchlässige Schutzschicht 32 getrennt sein kann. Ferner umfasst die Pumpzelle 30 die zweite Elektrode 18, die in dem Elektrodenhohlraum 24 angeordnet ist. Die zweite Elektrode 18 kann ebenfalls ringförmig ausgestaltet sein und rotationssymmetrisch um das Gaszutrittsloch 22 angeordnet sein. Beispielsweise sind die erste Elektrode 16 und die zweite Elektrode 18 koaxial zu dem Gaszutrittsloch 22 angeordnet. Der oben genannte Grenzstrom stellt somit einen Stromfluss zwischen der ersten Elektrode 16 und der zweiten Elektrode 18 über den Festelektrolyten 14 dar. In der Verlängerung der Erstreckungsrichtung des Gaszutrittslochs ist ein Heizelement 34 in dem Schichtaufbau 12 angeordnet. Das Heizelement 34 weist einen Heizbereich 36 und elektrische Zuleitungsbahnen 38 auf. Der Heizbereich 36 ist beispielsweise mäanderförmig ausgebildet. Das Heizelement 34 ist zwischen der Zwischenschicht 14b und der Heizschicht 14c angeordnet. Es wird ausdrücklich erwähnt, dass das Heizelement 34 beidseitig von einer dünnen Schicht aus einem elektrisch isolierenden Material, wie beispielsweise Aluminiumoxid, umgeben ist, auch wenn dies in den Figuren nicht näher dargestellt ist. Mit anderen Worten ist zwischen der Zwischenschicht 14b und dem Heizelement 34 sowie zwischen dem Heizelement 34 und der Heizschicht 14c die dünne Schicht aus dem elektrische isolierenden Material angeordnet. Da eine derartige Schicht beispielsweise aus dem oben genannten Stand der Technik bekannt ist, wird diese nicht näher beschrieben. Für weitere Details bezüglich der Schicht aus dem elektrisch isolierenden Material wird daher auf den oben genannten Stand der Technik, verwiesen, dessen Inhalt betreffend die Schicht aus dem elektrischen Material durch Verweis hierin eingeschlossen ist.

Ferner kann der Schichtaufbau 12 eine dritte Elektrode 40, eine vierte Elektrode 42 und einen Referenzgaskanal 44 umfassen. Der Referenzgaskanal 44 kann sich senkrecht zu einer Erstreckungsrichtung des Gaszutrittslochs 22 in das Innere des Festelektrolyten 14 erstrecken. Wie oben erwähnt, ist das Gaszutrittsloch 22 zylindrisch ausgebildet, so dass die Erstreckungsrichtung des Gaszutrittslochs 22 parallel zu einer Zylinderachse des Gaszutrittslochs 22 verläuft. In diesem Fall erstreckt sich der Referenzgaskanal 44 senkrecht zu der Zylinderachse des Gaszutrittslochs 22. Der Referenzgaskanal 44 kann sich beispielsweise parallel zu dem Kanal 26 erstrecken. Es wird ausdrücklich erwähnt, dass der Referenzgaskanal 44 auch in einer gedachten Verlängerung des Gaszutrittslochs 22 und somit weiter im Inneren des Festelektrolyten 14 angeordnet sein kann. Der Referenzgaskanal 44 muss nicht als makroskopischer Referenzgaskanal 44 ausgebildet sein. Beispielsweise kann der Referenzgaskanal 44 als so genannte gepumpte Referenz ausgeführt sein, das heißt als künstliche Referenz.

Die dritte Elektrode kann in dem Elektrodenhohlraum 24 angeordnet sein. Beispielsweise liegt die dritte Elektrode 40 der zweiten Elektrode 18 gegenüber. Die vierte Elektrode 42 kann in dem Referenzgaskanal 44 angeordnet sein. Die dritte Elektrode 40, die vierte Elektrode 42 und der Teil des Festelektrolyten 14 zwischen der dritten Elektrode 40 und der vierten Elektrode 42 bilden eine elektrochemische Zelle, wie beispielsweise eine Nernstzelle 46. Mittels der Pumpzelle 30 kann beispielsweise ein Pumpstrom durch die Pumpzelle 30 derart eingestellt werden, dass in dem Elektrodenhohlraum 24 die Bedingung Lambda = 1 oder eine andere bekannte Zusammensetzung herrscht. Diese Zusammensetzung wird wiederum von der Nernstzelle erfasst, indem eine Nernstspannung zwischen der dritten Elektrode und der vierten Elektrode gemessen wird. Da in dem Referenzgaskanal 44 eine bekannte Gaszusammensetzung vorliegt bzw. diese einem Sauerstoffüberschuss ausgesetzt ist, kann anhand der gemessenen Spannung auf die Zusammensetzung in dem Elektrodenhohlraum 24 geschlossen werden.

Der so ausgebildete Schichtaufbau weist eine Anschlussseite 48, eine Stirnseite 50, eine Oberseite 52, eine Unterseite 54 und zwei Seitenflächen 56 auf, die die Oberseite 52 und die Unterseite 54 verbinden.

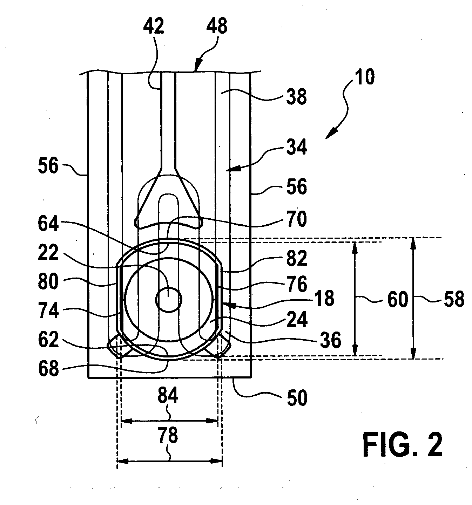

Fig. 2 zeigt eine Längsschnittansicht eines Sensorelements 10 gemäß einer Ausführungsform der Erfindung. Angedeutet ist dabei die Lage des Heizelements 34, des Elektrodenhohlraums 24, der zweiten Elektrode 18 und der vierten Elektrode 42. Die zweite Elektrode 18 weist mindestens einen ersten Außendurchmesser 58 auf, der größer als ein erster Außendurchmesser 60 des Elektrodenhohlraums 24 ist. Der Elektrodenhohlraum 24 ist ringförmig ausgebildet und weist mindestens zwei runde Elektrodenhohlraumabschnitte 62, 64 auf, die nachstehend als erster runder Elektrodenhohlraumabschnitt 62 und zweiter runder Elektrodenhohlraumabschnitt 64 bezeichnet werden. Die zwei runden Elektrodenhohlraumabschnitte 62, 64 liegen sich mit einem Mittelpunkt 66 des Elektrodenhohlraums 24 dazwischen gegenüber. Der erste Außendurchmesser 60 des Elektrodenhohlraums 24 ist durch die zwei runden Elektrodenhohlraumabschnitte 62, 64 definiert. Die zweite Elektrode 18 ist ebenfalls ringförmig ausgebildet und weist mindestens zwei runde Elektrodenabschnitte 68, 70 auf, die nachstehend als erster runder Elektrodenabschnitt 68 und zweiter runder Elektrodenabschnitt 70 bezeichnet werden. Die zwei runden Elektrodenabschnitte 68, 70 liegen sich mit einem Mittelpunkt 72 der zweiten Elektrode 18 dazwischen gegenüber. Der erste Außendurchmesser 58 der zweiten Elektrode 18 ist durch die zwei runden Elektrodenabschnitte 68, 70 definiert. Die zwei runden Elektrodenhohlraumabschnitte 62, 64 und die zwei runden Elektrodenabschnitte 68, 70 sind dabei bezogen auf die Draufsicht parallel zueinander angeordnet. Die zwei runden Elektrodenhohlraumabschnitte 62, 64 und die zwei ersten runden Elektrodenabschnitte 68, 70 weisen jeweils identische Radien auf. Der erste Außendurchmesser 58 der zweiten Elektrode 18 ist beispielsweise 4000 µm und der erste Außendurchmesser 60 des Elektrodenhohlraums 24 ist beispielsweise 3800 µm. Dies macht deutlich, dass der Elektrodenhohlraum 24 kleiner als bei herkömmlichen Sensorelementen mit kreisringförmiger Ausbildung sowohl des Elektrodenhohlraums als auch der darin angeordneten Elektrode ausgeführt ist. So ist der Außendurchmesser des Elektrodenhohlraums bei herkömmlichen Sensorelementen 10 üblicherweise 4000 µm.

Wie weiter aus Fig. 2 zu erkennen ist, weist der Elektrodenhohlraum 24 mindestens zwei gerade Elektrodenhohlraumabschnitte 74, 76 auf, die sich mit dem Mittelpunkt 66 des Elektrodenhohlraums 24 dazwischen gegenüber liegen. Die zwei geraden Elektrodenhohlraumabschnitte 74, 76 definieren einen zweiten Außendurchmesser 78 des Elektrodenhohlraums 24. Die zweite Elektrode 18 weist ebenfalls mindestens zwei gerade Elektrodenabschnitte 80, 82 auf, die sich mit dem Mittelpunkt 72 der zweiten Elektrode 18 gegenüberliegen. Die zwei geraden Elektrodenabschnitte 80, 82 definieren einen zweiten Außendurchmesser 84 der zweiten Elektrode 18. Der zweite Außendurchmesser 84 der zweiten Elektrode 18 ist größer als der zweite Außendurchmesser 78 des Elektrodenhohlraums 24. Die zwei geraden Elektrodenhohlraumabschnitte 74, 76 sowie die zwei geraden Elektrodenabschnitte 80, 82 sind parallel zueinander angeordnet. Insbesondere sind die zwei geraden Elektrodenhohlraumabschnitte 74, 76 sowie die geraden Elektrodenabschnitte 80, 82 parallel zu den Seitenflächen 56 angeordnet. Durch die Verkleinerung des Elektrodenhohlraums 24 und das Vorsehen der zwei geraden Elektrodenhohlraumabschnitte 74, 76 parallel zu den Seitenflächen 56 bei dem erfindungsgemäßen Sensorelement 10 kann die Breite des Dichtrahmens 29 vergrößert werden. Die Breite des Dichtrahmens 29 ist eine Abmessung senkrecht zu den Seitenflächen 56. Die zweite Elektrode 18 ist dabei bedingt durch die Vergrößerung des Außendurchmessers teilweise auf oder an dem Dichtrahmen 29 angeordnet.

## Patentansprüche

1. Sensorelement (10) zur Erfassung mindestens einer Eigenschaft eines Messgases in einem Messgasraum, insbesondere zur Erfassung eines Anteils einer Gaskomponente in dem Messgas oder einer Temperatur des Messgases, umfassend einen keramischen Schichtaufbau (12) mit mindestens einer elektrochemischen Zelle, wobei die elektrochemische Zelle mindestens eine erste Elektrode (16), eine zweite Elektrode (18) und mindestens einen die erste Elektrode (16) und die zweite Elektrode (18) verbindenden Festelektrolyten (14) aufweist, wobei in dem Schichtaufbau (12) ein Elektrodenhohlraum (24) ausgebildet ist, wobei die zweite Elektrode (18) so in dem Schichtaufbau (12) angeordnet ist, dass die zweite Elektrode (18) dem Elektrodenhohlraum (24) zuweist, wobei die zweite Elektrode (18) mindestens einen ersten Außendurchmesser (58) aufweist, der größer als ein erster Außendurchmesser (60) des Elektrodenhohlraums (24) ist, **dadurch gekennzeichnet, dass**
der Elektrodenhohlraum (24) ringförmig ausgebildet ist und mindestens zwei runde Elektrodenhohlraumabschnitte (62, 64) aufweist, die sich mit einem Mittelpunkt des Elektrodenhohlraums (66) dazwischen gegenüberliegen, und dass der erste Außendurchmesser des Elektrodenhohlraums (60) durch die zwei runden Elektrodenhohlraumabschnitte (62, 64) definiert ist, und dass die zweite Elektrode (18) ringförmig ausgebildet ist und mindestens zwei runde Elektrodenabschnitte (68, 70) aufweist, die sich mit einem Mittelpunkt der zweiten Elektrode (72) dazwischen gegenüberliegen, und dass der erste Außendurchmesser (58) der zweiten Elektrode (18) durch die zwei runden Elektrodenabschnitte (68, 70) definiert ist,
und dass die zwei runden Elektrodenhohlraumabschnitte (62, 64) und die zwei runden Elektrodenabschnitte (68, 70) parallel zueinander angeordnet sind,
und dass der Elektrodenhohlraum (24) mindestens zwei gerade Elektrodenhohlraumabschnitte (74, 76) aufweist, die sich mit einem Mittelpunkt des Elektrodenhohlraums (66) dazwischen gegenüberliegen, und dass ein zweiter Außendurchmesser (78) des Elektrodenhohlraums (24) durch die zwei geraden Elektrodenhohlraumabschnitte (74, 76) definiert ist, und dass die zweite Elektrode (18) mindestens zwei gerade Elektrodenabschnitte (80, 82) aufweist, die sich mit einem Mittelpunkt der zweiten Elektrode (72) dazwischen gegenüberliegen, und dass ein zweiter Außendurchmesser (84) der zweiten Elektrode (18) durch die zwei geraden Elektrodenabschnitte (80, 82) definiert ist, wobei der zweite Außendurchmesser (84) der zweiten Elektrode (18) größer als der zweite Außendurchmesser (78) des Elektrodenhohlraums (24) ist,
und dass die zwei geraden Elektrodenhohlraumabschnitte (74, 76) und die zwei geraden Elektrodenabschnitte (80, 82) parallel zueinander angeordnet sind
und dass der Schichtaufbau (12) eine Anschlussseite (48), eine Stirnseite (50), eine Oberseite (52), eine Unterseite (54) und zwei Seitenflächen (56) aufweist, und dass die Seitenflächen (56) die Oberseite (52) und die Unterseite (54) verbinden, und dass die zwei geraden Elektrodenhohlraumabschnitte (74, 76) und die zwei geraden Elektrodenabschnitte (80, 82) parallel zu den Seitenflächen (56) angeordnet sind.

2. Sensorelement (10) nach Anspruch 1, wobei die zwei runden Elektrodenhohlraumabschnitte (62, 64) identische Radien aufweisen, wobei die zwei runden Elektrodenabschnitte (68, 70) identische Radien aufweisen.

3. Sensorelement (10) nach Anspruch 1, wobei die zwei runden Elektrodenhohlraumabschnitte (62, 64) unterschiedliche Radien aufweisen, wobei die zwei runden Elektrodenabschnitte (68, 70) unterschiedliche Radien aufweisen.

4. Sensorelement (10) nach dem vorhergehenden Anspruch, wobei der Elektrodenhohlraum (24) mindestens zwei gerade Elektrodenhohlraumabschnitte (74, 76) aufweist, die sich mit einem Mittelpunkt des Elektrodenhohlraums (66) dazwischen gegenüberliegen, wobei ein zweiter Außendurchmesser des Elektrodenhohlraums (78) durch die zwei geraden Elektrodenhohlraumabschnitte (74, 76) definiert ist, wobei die zweite Elektrode (18) mindestens zwei gerade Elektrodenabschnitte (80, 82) aufweist, die sich mit einem Mittelpunkt der zweiten Elektrode (72) dazwischen gegenüberliegen, wobei die zwei geraden Elektrodenhohlraumabschnitte (74, 76) und die zwei geraden Elektrodenabschnitte (80, 82) parallel zueinander angeordnet sind, wobei ein zweiter Außendurchmesser (84) der zweiten Elektrode (18) durch die zwei geraden Elektrodenabschnitte (80, 82) definiert ist, wobei der zweite Außendurchmesser (84) der zweiten Elektrode (18) größer als der zweite Außendurchmesser des Elektrodenhohlraums (78) ist.

5. Sensorelement (10) nach einem der beiden vorhergehenden Ansprüche,
wobei der Schichtaufbau (12) eine Anschlussseite (48), eine Stirnseite (50), eine Oberseite (52), eine Unterseite (54) und zwei Seitenflächen (56) aufweist, wobei die Seitenflächen (56) die Oberseite (52) und die Unterseite (54) verbinden, wobei ein erster runder Elektrodenhohlraumabschnitt (62) der Stirnseite (50) zugewandt ist und ein zweiter runder Elektrodenhohlraumabschnitt (64) der Anschlussseite (48) zugewandt ist, wobei der erste runde Elektrodenhohlraumabschnitt (62) einen größeren Radius als der zweite Elektrodenhohlraumabschnitt (64) aufweist, wobei ein erster runder Elektrodenabschnitt (68) der Stirnseite (50) zugewandt ist und ein zweiter runder Elektrodenabschnitt (70) der Anschlussseite (48) zugewandt ist, wobei der erste runde Elektrodenabschnitt (68) einen größeren Radius als der zweite Elektrodenabschnitt (70) aufweist.

## Claims

1. Sensor element (10) for detecting at least one property of a measuring gas in a measuring gas chamber, in particular for detecting a proportion of a gas component in the measuring gas or a temperature of the measuring gas, comprising a ceramic layered structure (12) having at least one electrochemical cell, wherein the electrochemical cell has at least a first electrode (16), a second electrode (18) and at least one solid electrolyte (14) connecting the first electrode (16) and the second electrode (18), wherein an electrode cavity (24) is formed in the layered structure (12), wherein the second electrode (18) is arranged in the layered structure (12) such that the second electrode (18) faces the electrode cavity (24), wherein the second electrode (18) has at least one first outer diameter (58) that is larger than a first outer diameter (60) of the electrode cavity (24), **characterized in that**
the electrode cavity (24) has an annular design and has at least two round electrode cavity sections (62, 64) that oppose one another with a midpoint of the electrode cavity (66) between them, and **in that** the first outer diameter of the electrode cavity (60) is defined by the two round electrode cavity sections (62, 64), and **in that** the second electrode (18) has an annular design and has at least two round electrode sections (68, 70) that oppose one another with a midpoint of the second electrode (72) between them, and **in that** the first outer diameter (58) of the second electrode (18) is defined by the two round electrode sections (68, 70),
and **in that** the two round electrode cavity sections (62, 64) and the two round electrode sections (68, 70) are arranged parallel to one another,
and **in that** the electrode cavity (24) has at least two straight electrode cavity sections (74, 76) that oppose one another with a midpoint of the electrode cavity (66) between them, and **in that** a second outer diameter (78) of the electrode cavity (24) is defined by the two straight electrode cavity sections (74, 76), and **in that** the second electrode (18) has at least two straight electrode sections (80, 82) that oppose one another with a midpoint of the second electrode (72) between them, and **in that** a second outer diameter (84) of the second electrode (18) is defined by the two straight electrode sections (80, 82), wherein the second outer diameter (84) of the second electrode (18) is larger than the second outer diameter (78) of the electrode cavity (24),
and **in that** the two straight electrode cavity sections (74, 76) and the two straight electrode sections (80, 82) are arranged parallel to one another,
and **in that** the layered structure (12) has a connection side (48), an end face (50), an upper side (52), a lower side (54) and two side faces (56), and **in that** the side faces (56) connect the upper side (52) and the lower side (54), and **in that** the two straight electrode cavity sections (74, 76) and the two straight electrode sections (80, 82) are arranged parallel to the side faces (56).

2. Sensor element (10) according to Claim 1, wherein the two round electrode cavity sections (62, 64) have identical radii, wherein the two round electrode sections (68, 70) have identical radii.

3. Sensor element (10) according to Claim 1, wherein the two round electrode cavity sections (62, 64) have different radii, wherein the two round electrode sections (68, 70) have different radii.

4. Sensor element (10) according to the preceding claim,
wherein the electrode cavity (24) has at least two straight electrode cavity sections (74, 76) that oppose one another with a midpoint of the electrode cavity (66) between them, wherein a second outer diameter of the electrode cavity (78) is defined by the two straight electrode cavity sections (74, 76), wherein the second electrode (18) has at least two straight electrode sections (80, 82) that oppose one another with a midpoint of the second electrode (72) between them, wherein the two straight electrode cavity sections (74, 76) and the two straight electrode sections (80, 82) are arranged parallel to one another, wherein a second outer diameter (84) of the second electrode (18) is defined by the two straight electrode sections (80, 82), wherein the second outer diameter (84) of the second electrode (18) is larger than the second outer diameter of the electrode cavity (78).

5. Sensor element (10) according to either of the two preceding claims, wherein the layered structure (12) has a connection side (48), an end face (50), an upper side (52), a lower side (54) and two side faces (56), wherein the side faces (56) connect the upper side (52) and the lower side (54), wherein a first round electrode cavity section (62) faces the end face (50) and a second round electrode cavity section (64) faces the connection side (48), wherein the first round electrode cavity section (62) has a larger radius than the second electrode cavity section (64), wherein a first round electrode section (68) faces the end face (50) and a second round electrode section (70) faces the connection side (48), wherein the first round electrode section (68) has a larger radius than the second electrode section (70).

## Revendications

1. Elément de détection (10) destiné à détecter au moins une propriété d'un gaz de mesure dans un espace de gaz de mesure, en particulier détecter une proportion d'un composant gazeux dans le gaz de mesure ou une température du gaz de mesure, l'élément de détection comprenant une structure en couches céramique (12) comportant au moins une cellule électrochimique, la cellule électrochimique comportant au moins une première électrode (16), une deuxième électrode (18) et au moins un électrolyte solide (14) reliant la première électrode (16) et la deuxième électrode (18), une cavité d'électrode (24) étant formée dans la structure en couches (12), la deuxième électrode (18) étant disposée dans la structure en couches (12) de telle sorte que la deuxième électrode (18) soit dirigée vers la cavité d'électrode (24), la deuxième électrode (18) ayant au moins un premier diamètre extérieur (58) qui est plus grand qu'un premier diamètre extérieur (60) de la cavité d'électrode (24), **caractérisé en ce que** la cavité d'électrode (24) est de forme annulaire et comporte au moins deux portions de cavité d'électrode rondes (62, 64) qui sont opposées l'une à l'autre avec un point central de la cavité d'électrode (66) placé entre elles, et **en ce que** le premier diamètre extérieur de la cavité d'électrode (60) est défini par les deux portions de cavité d'électrode rondes (62, 64) et **en ce que** la deuxième électrode (18) est annulaire et comporte au moins deux portions d'électrode rondes (68, 70) qui sont opposées avec un point central de la deuxième électrode (72) placé entre elles, et **en ce que** le premier diamètre extérieur (58) de la deuxième électrode (18) est définie par les deux portions d'électrode rondes (68, 70),
et **en ce que** les deux portions de cavité d'électrode rondes (62, 64) et les deux portions d'électrode rondes (68, 70) sont disposées parallèlement l'une à l'autre, et **en ce que** la cavité d'électrode (24) comporte au moins deux portions de cavité d'électrode droites (74, 76) qui sont opposées l'une à l'autre avec un point central de la cavité d'électrode (66) placé entre elles, et en qu'un deuxième diamètre extérieur (78) de la cavité d'électrode (24) est défini par les deux portions de cavité d'électrode droites (74, 76) et **en ce que** la deuxième électrode (18) comporte au moins deux portions d'électrode droites (80, 82) qui sont opposées l'une à l'autre avec un point central de la deuxième électrode (72) placé entre elles, et **en ce qu'**un deuxième diamètre extérieur (84) de la deuxième électrode (18) est défini par les deux portions d'électrode droites (80, 82), le deuxième diamètre extérieur (84) de la deuxième électrode (18) étant supérieur au deuxième diamètre extérieur (78) de la cavité d'électrode (24),
et **en ce que** les deux portions de cavité d'électrode droites (74, 76) et les deux portions d'électrode droites (80, 82) sont disposées parallèlement l'une à l'autre
et **en ce que** la structure en couches (12) comporte un côté de raccordement (48), un côté frontal (50), un côté supérieur (52), un côté inférieur (54) et deux surfaces latérales (56), et **en ce que** les surfaces latérales (56) relient le côté supérieur (52) et le côté inférieur (54), et **en ce que** les deux portions de cavité d'électrode droites (74, 76) et les deux portions d'électrode droites (80, 82) sont disposées parallèlement aux surfaces latérales (56).

2. Elément de détection (10) selon la revendication 1, les deux portions de cavité d'électrode rondes (62, 64) ayant des rayons identiques, les deux portions d'électrode rondes (68, 70) ayant des rayons identiques.

3. Elément de détection (10) selon la revendication 1, les deux portions de cavité d'électrode rondes (62, 64) ayant des rayons différents, les deux portions d'électrode rondes (68, 70) ayant des rayons différents.

4. Elément de détection (10) selon la revendication précédente, la cavité d'électrode (24) comportant au moins deux portions de cavité d'électrode droites (74, 76) qui sont opposées l'une à l'autre avec un point central de la cavité d'électrode (66) placé entre elles, un deuxième diamètre extérieur de la cavité d'électrode (78) étant défini par les deux portions de cavité d'électrode droites (74, 76), la deuxième électrode (18) comportant au moins deux portions d'électrode droites (80, 82) qui sont opposées l'une à l'autre avec un point central de la deuxième électrode (72) placé entre elles, les deux portions de cavité d'électrode droites (74, 76) et les deux portions d'électrode droites (80, 82) étant disposées parallèlement l'une à l'autre, un deuxième diamètre extérieur (84) de la deuxième électrode (18) étant défini par les deux portions d'électrode droites (80, 82), le deuxième diamètre extérieur (84) de la deuxième électrode (18) étant plus grand que le deuxième diamètre extérieur de la cavité d'électrode (78).

5. Elément de détection (10) selon l'une des deux revendications précédentes, la structure en couches (12) comportant un côté de raccordement (48), un côté frontal (50), un côté supérieur (52), un côté inférieur (54) et deux surfaces latérales (56), les surfaces latérales (56) reliant le côté supérieur (52) et le côté inférieur (54), une première portion de cavité d'électrode ronde (62) étant dirigée vers le côté frontal (50) et une deuxième portion de cavité d'électrode ronde (64) étant dirigé vers le côté de raccordement (48), la première portion de cavité d'électrode ronde (62) ayant un rayon plus grand que celui de la deuxième portion de cavité d'électrode (64), une première portion d'électrode ronde (68) étant dirigée vers le côté frontal (50) et une deuxième portion d'électrode ronde (70) étant dirigée vers le côté de raccordement (48), la première portion d'électrode ronde (68) ayant un rayon plus grand que la deuxième portion d'électrode (70).
